# EUROPEAN PATENT APPLICATION

(11) **EP 4 571 615 A1**
(43) Date of publication of application: **18.06.2025**
(21) Application number: 24214741.1
(22) Date of filing: 22.11.2024
(51) Int. Cl.: G06Q 10/10, G06F 40/103, G06F 40/18, G06V 30/10, G06V 30/412

(54) **METHOD AND SYSTEM FOR EFFICIENT AIRCRAFT ENGINE PAPER LOGBOOK DIGITIZATION**

(30) Priority: 15.12.2023 IN 202311085659; 09.02.2024 US 202418437440
(71) Applicant: HONEYWELL INTERNATIONAL INC., Charlotte, NC 28202 (US)
(72) Inventor: PALANI, Kamesh, Charlotte, 28202 (US); RAO, Sujaya, Charlotte, 28202 (US); V, Varshaneya, Charlotte, 28202 (US); SHINDGIKAR, Shilpa, Charlotte, 28202 (US)
(74) Representative: LKGlobal UK Ltd.

(57) **Abstract**

A method and system for creating and using a digital record of an aircraft engine logbook has been developed. Existing logbooks for aircraft engines are scanned into digital files of a computer system and converted into an editable format that uses optical character recognition (OCR). Each editable digital file is segregated according to a document type as determined by a pattern template that is electronically read from the editable digital file. Each segregated digital file for checked for accuracy and any errors are edited, in the digital file. The corrected digital files are stored in an electronic database. Selected digital files are converted into an electronic spreadsheet format that lists the document type. The spreadsheet of the segregated digital files is verified for correct formatting and provided to an end user.

## Description

### TECHNICAL FIELD

The present invention generally relates to aircraft operations, and more particularly relates to a method and system for efficient engine paper logbook digitization.

### BACKGROUND

Thousands of aircraft engines are currently in use and the typically use paper logbooks to record and log usage, maintenance, problems, etc. Digitizing these paper logbooks for a replacement digital logbook (DLB) is challenging and labor intensive. Also, errors in the conversion may have both legal and regulatory consequences so the quality of the converted data is very critical. Hence, there is a need for a method and system for efficient aircraft engine paper logbook digitization.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A method is provided for creating and using a digital record of an aircraft engine logbook. The method comprises: scanning existing logbooks for aircraft engines into a digital file of a computer system; converting each digital file into an editable format that uses optical character recognition (OCR); segregating each editable digital file according to a document type as determined by a pattern template; tagging each editable digital file with a conventional name that is electronically read from the editable digital file; checking each segregated digital file for accuracy and editing any errors in the segregated digital file; storing the checked and corrected digital files in a electronic database; converting the segregated digital files into an electronic spreadsheet format that lists the document type; verifying the spreadsheet listing of the segregated digital files for correct formatting; and providing the verified spreadsheet listing of the segregated digital files to the end user.

A system is provided for creating and using a digital record of an aircraft engine logbook. The system comprises: an electronic scanner that scans existing logbooks for aircraft engines into a digital file of a computer system; a computer system that includes a microprocessor that, converts each digital file into an editable format that uses optical character recognition (OCR), segregates each editable digital file according to a document type as determined by a pattern template, tags each editable digital file with a conventional name that is electronically read from the editable digital file, checks each segregated digital file for accuracy and editing any errors in the segregated digital file, converts the segregated digital files into an electronic spreadsheet format that lists the document type, verifies the spreadsheet listing of the segregated digital files for correct formatting, and provides the verified spreadsheet listing of the segregated digital files to the end user; and an electronic database that stores the checked and corrected digital files.

Furthermore, other desirable features and characteristics of the disclosed embodiments will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a block diagram of aircraft computer system in accordance with the disclosed embodiments;
FIG.2 is a block diagram of a system for efficient aircraft engine paper logbook digitization system in accordance with the disclosed embodiments;
FIGS. 3A-3C are diagrams of the tasks of a method for efficient aircraft engine paper logbook digitization in accordance with the disclosed embodiments; and
FIG. 4 is a flowchart of a method for efficient aircraft engine paper logbook digitization in accordance with the disclosed embodiments.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

A method and system for creating and using a digital record of an aircraft engine logbook has been developed. Existing logbooks for aircraft engines are scanned into digital files of a computer system and converted into an editable format that uses optical character recognition (OCR). Each editable digital file is segregated according to a document type as determined by a pattern template that is electronically read from the editable digital file. Each segregated digital file for checked for accuracy and any errors are edited. in the digital file. The corrected digital files are stored in an electronic database. Selected digital files are converted into an electronic spreadsheet format that lists the document type. The spreadsheet of the segregated digital files is verified for correct formatting and provided to an end user.

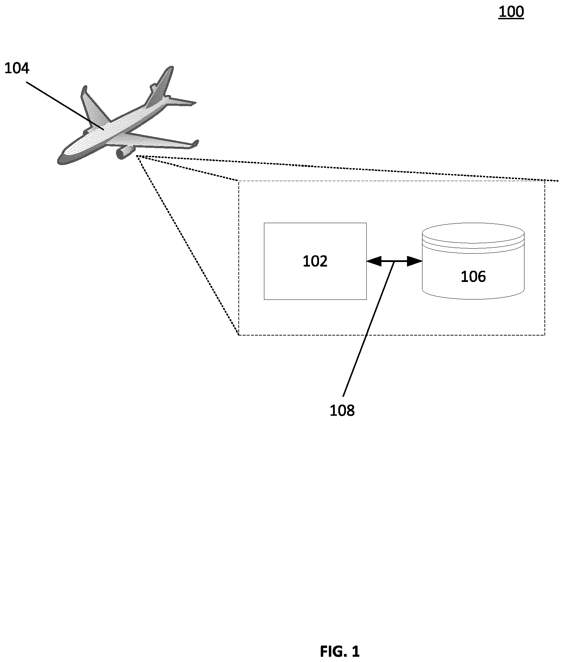

Turning now to the figures, FIG. 1 is a diagram of aircraft computer system 100, in accordance with the disclosed embodiments. The computing device 102 may be implemented by any computing device that includes at least one processor, some form of memory hardware, a user interface, and communication hardware. For example, the computing device 102 may be implemented using a personal computing device, such as a tablet computer, a laptop computer, a personal digital assistant (PDA), a smartphone, or the like. In this scenario, the computing device 102 is capable of storing, maintaining, and executing Electronic Flight Bag (EFB) applications. In other embodiments, the computing device 102 may be implemented using a computer system onboard the aircraft 104.

The aircraft 104 may be implemented as an airplane, helicopter, spacecraft, hovercraft, the related engines/critical components of the respective aircraft or the like. The one or more avionics systems may include a Flight Management System (FMS), navigation devices, weather detection devices, radar devices, communication devices, brake systems, and/or any other electronic system or avionics system used to operate the aircraft 104. Data obtained from the one or more avionics systems may include, without limitation: flight data, aircraft heading, aircraft speed, aircraft position, altitude, descent rate, position of air spaces surrounding a current flight plan, activity of air spaces surrounding a current flight plan, or the like.

The server system 106 may include any number of application servers, and each server may be implemented using any suitable computer. In some embodiments, the server system 106 includes one or more dedicated computers. In some embodiments, the server system 108 includes one or more computers carrying out other functionality in addition to server operations. The server system 106 may store and provide any type of data in a database. Such data may include, without limitation: flight plan data, aircraft parameters, avionics data and associated user actions, and other data compatible with the computing device 102.

The computing device 102 is usually located onboard the aircraft 104, and the computing device 102 communicates with the one or more avionics systems via wired and/or wireless communication connection. The computing device 102 and the server system 106 may both be located onboard the aircraft 104. In other embodiments, the computing device 102 and the server system 106 may be disparately located, and the computing device 102 communicates with the server system 106 via a data communication network 108 and/or via communication mechanisms onboard the aircraft 104.

The data communication network 108 may be any digital or other communications network capable of transmitting messages or data between devices, systems, or components. In certain embodiments, the data communication network 108 includes a packet switched network that facilitates packet-based data communication, addressing, and data routing. The packet switched network could be, for example, a wide area network, the Internet, or the like. In various embodiments, the data communication network 108 includes any number of public or private data connections, links or network connections supporting any number of communications protocols. The data communication network 108 may include the Internet, for example, or any other network based upon TCP/IP or other conventional protocols. In various embodiments, the data communication network 108 could also incorporate a wireless and/or wired telephone network, such as a cellular communications network for communicating with mobile phones, personal digital assistants, and/or the like. The data communication network 108 may also incorporate any sort of wireless or wired local and/or personal area networks, such as one or more IEEE 802.3, IEEE 802.16, and/or IEEE 802.11 networks, and/or networks that implement a short range (e.g., Bluetooth) protocol. For the sake of brevity, conventional techniques related to data transmission, signaling, network control, and other functional aspects of the systems (and the individual operating components of the systems) may not be described in detail herein.

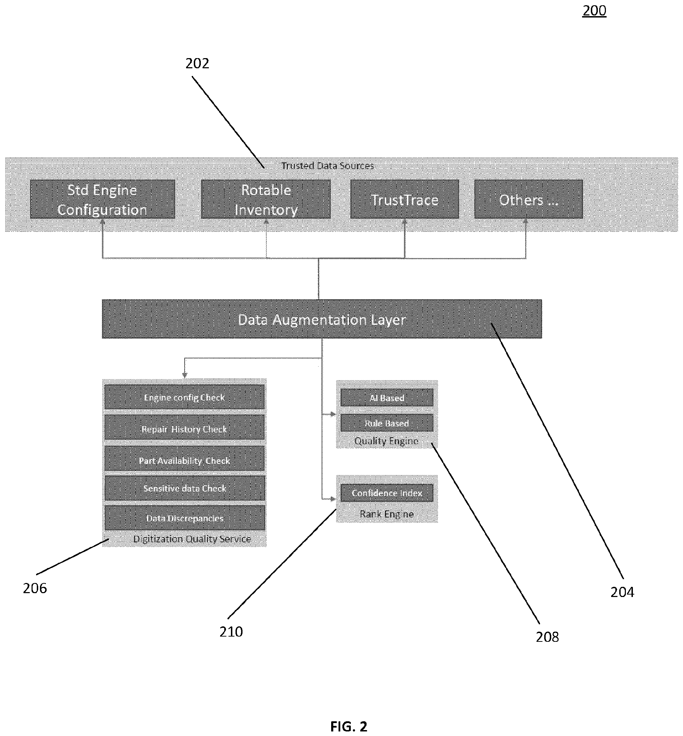

FIG.2 is a block diagram of a system 200 for efficient aircraft engine paper logbook digitization system in accordance with the disclosed embodiments. Initially, important data concerning aircraft engine maintenance is collected from trusted data sources 202. These sources include standard engine configuration information, inventory data, parts information, etc. This data is provided to a data augmentation layer of the system 204. The previously digitized aircraft engine logbooks files 206 include entries such as: engine configuration; repair history; parts availability; sensitive data; and any identified data discrepancies. The digitized files 206 are checked against the information gathered by the data augmentation layer 204 by a quality engine 208.

The quality engine 208 may be "rule based" which means that the engine operates under a set a pre-determined rule set. The engine read the rules dynamically at run time and evaluates the rules against any application objects. In other embodiments, the quality engine may be "artificial intelligence (Al)" based which means the engine is a search platform that uses machine learning models to provide results. An AI engine finds structure and regularities in data so that relationships can be established that in turn are used to adjust its search algorithm.

Once the quality engine 208 checks each digital file, a rank engine 210 is used to quantify the data from each digital file. Any missing data entries or suspected inaccurate data entries are identified. Each data file is given a confidence score. If the confidence score is below a predefined threshold, an alert is provided for the file. Also, the data field in question may be highlighted in the file and a possible correction maybe suggested.

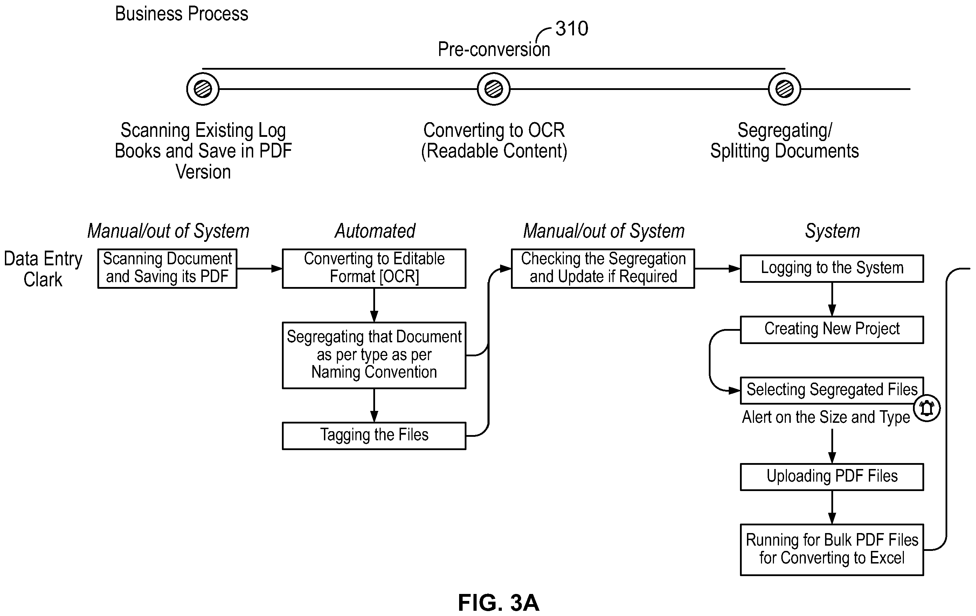

FIGS. 3A-3C are diagrams 310, 320 and 330 of the tasks of a method for efficient aircraft engine paper logbook digitization in accordance with the disclosed embodiments. Turning to FIG. 3A, the pre-conversion phase 310 of the process includes scanning existing aircraft engine logbooks and saving them as a digital file (*e.g.*, PDF file). The initial scanning may be done manually by a data entry clerk or other scanning capability that is external to the system. The digital file is converted into an editable format that uses optical character recognition (OCR). The converted files are each segregated by type of document. The type of document is determined by the AI system based on a pattern template of a conventional name of the document. In other embodiments, the filed are segregated by recognizing the pattern and structure of the document. The segregated document is tagged with the conventional name of the document.

At this point the quality engine reads the data of the converted file and tags any missing or inaccurate data entries within the file. Once the file has been checked and tagged by the quality engine, the file is checked if the segregation classification is corrected and if updates/corrections are needed to the file. This may be done manually by a data entry clerk or other capability that is external to the system. The files are then logged and saved to a database of the system.

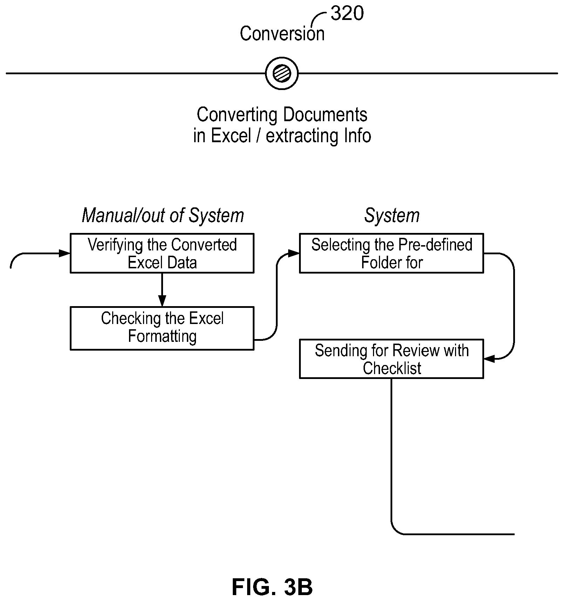

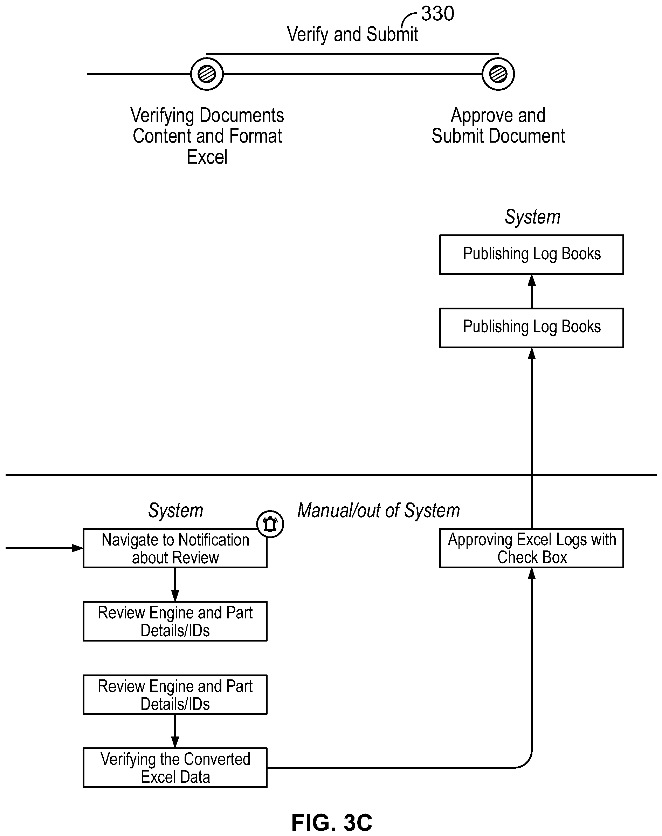

Turning to FIG. 3B, the conversion phase 320 of the process involves extracting information from the files and converts the files into a spreadsheet (e.g., Excel) format. A new project is created and the segregated files are selected, uploaded and run in bulk in order to convert the files into a spreadsheet format. Turning to FIG. 3C, the conversion phase 330 of the process of verification and submission involves verifying the files content and formatting as well as approving and submitting the documents for publication to the end user. Once the files are formatted, the converted data and formatting is verified. This verification may be done manually by a data entry clerk or other capability that is external to the system. Once verified, a folder is selected for the formatted files. The files are sent to the folder for review of data discrepancies that may be listed as a checklist.

Notifications are made about a need for review for each file as necessary. A review is made automatically of engine data, parts data, etc. A review may also be done manually by a data entry clerk or other capability that is external to the system as well as verification of the converted data into a spreadsheet format. Once all reviews are completed and the documents are approved, the digitized logbooks are published for use by an end user.

Advantages of the disclosed embodiments include a reduction in human errors by automating the digitization process. Multiple sources are used to ensure data quality. Missing and inaccurate data are noted by comparison to the baseline of engine configurations, parts inventory, etc. Notifications are made to review the digitized data along with the original document. The model will highlight the precise field in the original document for the selected digital document.

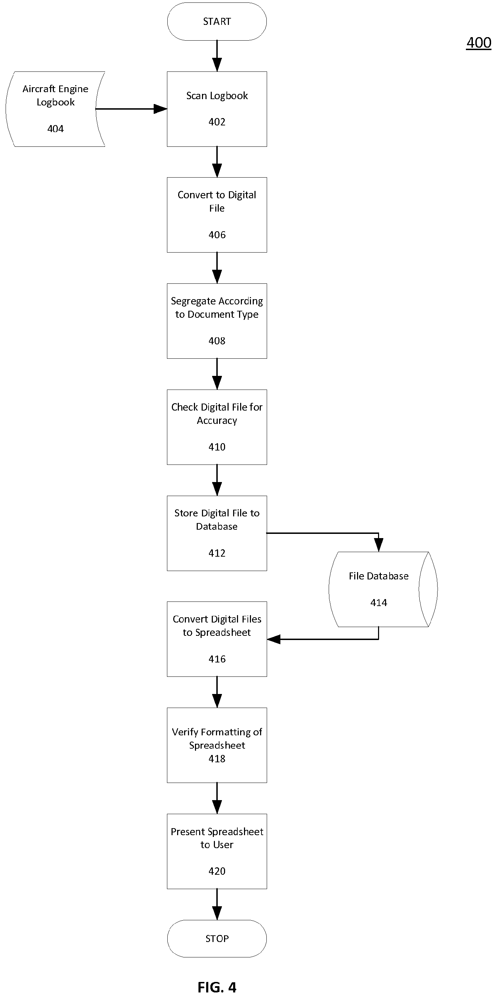

Turning now to FIG. 4, a flowchart 400 is shown of a method for efficient aircraft engine paper logbook digitization in accordance with the disclosed embodiments. First, existing engine logbooks for aircraft engines from external data sources 404 are scanned into digital files 402 of a computer system and converted into an editable format 406 that uses optical character recognition (OCR). Each editable digital file is segregated according to a document type 408 as determined by a pattern template that is electronically read from the editable digital file. Each segregated digital file for checked for accuracy and any errors are edited in the digital file 410. The corrected digital files are stored 412 in an electronic database 414. Selected digital files are converted into an electronic spreadsheet format 416 that lists the document type. The spreadsheet of the segregated digital files is verified for correct formatting 418 and provided to an end user 420.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction. As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method for creating and using a digital record of an aircraft engine logbook, comprising:
scanning existing logbooks for aircraft engines into a digital file of a computer system;
converting each digital file into an editable format that uses optical character recognition (OCR);
segregating each editable digital file according to a document type as determined by a pattern template;
tagging each editable digital file with a conventional name that is electronically read from the editable digital file;
checking each segregated digital file for accuracy and editing any errors in the segregated digital file;
storing the checked and corrected digital files in a electronic database;
converting the segregated digital files into an electronic spreadsheet format that lists the document type;
verifying the spreadsheet listing of the segregated digital files for correct formatting; and
providing the verified spreadsheet listing of the segregated digital files to an end user.

2. The method of Claim 1, where the existing logbooks are non-standardized logbooks.

3. The method of Claim 1, where checking each segregated digital file for accuracy is done externally to the computer system.

4. The method of Claim 1, where verifying the spreadsheet listing of the segregated digital files for correct formatting is done externally to the computer system.

5. The method of Claim 1, where checking each segregated digital file for accuracy is automatically done by a quality engine that is part of the computer system.

6. The method of Claim 1, where each segregated digital file for is checked for accuracy by identifying missing data.

7. The method of Claim 1, where each segregated digital file for is checked for accuracy by identifying potentially inaccurate data.

8. The method of Claim 1, where each segregated digital file is automatically given a confidence score for accuracy by a rank engine that is part of the computer system.

9. The method of Claim 1, further comprising:
receiving a document request from a user for access to digital files in the electronic database;
retrieving segregated digital files from the database according to the document request from an end user; and
providing the segregated digital files to the user in response to the document request.
